# FASCICULE DE BREVET EUROPEEN

(11) **EP 1 795 082 B1**
(45) Date de publication et mention de la délivrance du brevet: **13.02.2008**
(21) Numéro de dépôt: 05425873.6
(22) Date de dépôt: 07.12.2005
(51) Int. Cl.: A43B 5/04, A43B 23/24, B29D 31/518

(54) **Chaussure de sport avec décoration**
Sport shoe with decoration
Sportschuh mit Dekoration

(43) Date de publication de la demande: 13.06.2007
(73) Titulaire: LANGE INTERNATIONAL S.A., 1700 Fribourg (CH)
(72) Inventeur: Simonetti, Luigi, 38011 Cavareno (TN) (IT); Cerato, Gastone, 31100 Treviso (IT)
(74) Mandataire: Aivazian, Denis

(56) Documents cités:
- EP-A- 1 444 908
- EP-A- 1 574 144
- EP-A- 1 584 251
- US-A- 4 096 650

## Description

L'invention concerne tout ou partie d'une chaussure de sport comprenant une décoration, et est particulièrement adaptée aux chaussures pour planche de glisse telle que ski, surf ou chaussures de patinage, qui sont utilisées dans des environnements abrasifs. Elle concerne de plus aussi le procédé de fabrication d'une telle chaussure.

Les chaussures pour sports de glisse nécessitent un bon compromis entre les contraintes de confort et de rigidité. Cette dernière est nécessaire afin de permettre à l'utilisateur de guider de manière précise l'engin de glisse et de ressentir la réponse de l'engin à ses sollicitations. Pour cela, les chaussures se composent en général de parties dans un matériau plastique rigide. La décoration de telles chaussures est souvent sobre et réalisée par un marquage à chaud sur la surface extérieure du plastique. Les décorations obtenues sont souvent endommagées par l'environnement abrasif lors de l'utilisation de la chaussure et dans le cas du ski ou du surf, elles subissent de plus des coups involontaires provoqués par les carres qui provoquent des rayures inesthétiques sur ces décorations. De telles décorations sont donc peu durables. De plus, un tel procédé de décoration est contraignant car il ajoute une étape longue et coûteuse au procédé de fabrication des chaussures de sport.

D'une manière plus générale, les procédés de décoration des chaussures de sport de l'art antérieur sont insatisfaisants, ce qui s'explique par la réunion d'un nombre important de contraintes parmi lesquelles :
- la chaussure est destinée à un environnement abrasif et à une utilisation sportive entraînant des efforts importants subis par sa structure. Ces agressions extérieures rendent difficiles la disposition de décorations durables sur la chaussure ;
- en outre, la chaussure présente une surface complexe, non plane, ce qui ne facilite pas sa décoration ;
- la chaussure a de plus une structure complexe et coûteuse du fait des contraintes mécaniques et de confort et il n'est pas économiquement envisageable d'augmenter son coût de manière significative pour une contrainte supplémentaire d'ordre esthétique. Il n'est pas non plus envisageable de diminuer la rigidité et/ou le confort de la chaussure pour permettre de développer les solutions de décoration ;
- la chaussure doit aussi avoir un poids minimal pour optimiser son rendement et son coût. Des solutions de décoration qui entraîneraient une augmentation du poids de la chaussure conviendraient donc mal.

Pour répondre à ces contraintes, d'autres solutions ont été envisagées.

La première solution, décrite dans le document EP1574144, consiste à disposer un support de décoration entre deux couches de la paroi d'une chaussure obtenue par une double injection, la seconde couche extérieure étant transparente pour rendre visible la décoration. Cette solution présente l'inconvénient de nécessiter une étape supplémentaire de placement d'un support de décoration entre les deux étapes d'injection de la chaussure, ce qui complique le procédé de fabrication habituel.

La seconde solution, décrite dans le document EP1584251, consiste à disposer une décoration sur une surface intérieure d'une partie transparente de la paroi de la chaussure. Cette solution présente le même inconvénient que la précédente : il faut une étape supplémentaire de décoration.

Une troisième solution, décrite dans le document EP 1 444 908, décrit une chaussure ayant une structure en deux couches, la première couche possèdant des nervures et éventuellement des creux et la seconde couche pouvant être transparente.

Un objet général de la présente invention est de proposer une chaussure de sport comprenant une décoration.

Plus précisément, un premier objet de la présente invention consiste à proposer une chaussure de sport comprenant une décoration résistante aux contraintes imposées par l'utilisation de la chaussure de sport.

Un second objet de la présente invention consiste à proposer une chaussure de sport avec décoration dont le procédé de décoration est simple et le surcoût reste négligeable.

Un troisième objet de la présente invention consiste à proposer une chaussure de sport avec décoration dont les performances de rigidité et de confort sont importantes.

Selon le concept de l'invention, la chaussure de sport comprend au moins une partie de paroi fabriquée par un procédé de multi-injections habituel, pour répondre aux contraintes de rigidité et de confort de la chaussure, une première couche dans un premier matériau plastique ayant toutefois une décoration en creux, recouverte par un second matériau plastique transparent ou translucide d'une seconde couche de sorte que la décoration soit visible depuis l'extérieur et protégée des agressions extérieures.

L'invention est plus particulièrement définie par les revendications.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 est une vue d'une première couche d'une partie de chaussure selon l'invention ;
la figure 2 est une vue de la partie de chaussure de la figure 1 terminée ;
la figure 3 est une vue en coupe III-III de la partie de chaussure selon l'invention.

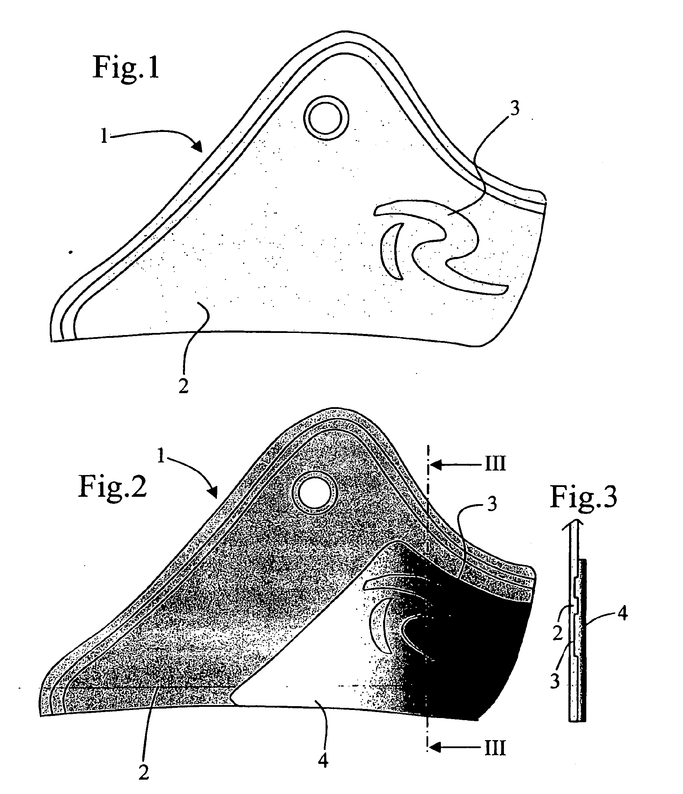

Le mode de réalisation décrit ci-après en référence aux figures 1 et 2 concerne la partie arrière de la coque d'une chaussure de ski de fond, destinée à recevoir le talon. Le concept de l'invention peut aussi être mis en oeuvre sur toute partie rigide d'une chaussure de sport, comme le collier ou la coque d'une chaussure de ski par exemple.

La figure 1 illustre la partie de chaussure 1 obtenue après une première étape d'injection d'un premier matériau plastique 2, selon une technique habituelle. Cette partie a une surface globalement lisse à l'exception d'une décoration 3, réalisée par des parties creuses du matériau plastique 2, directement obtenues par la forme du moule d'injection qui comprend donc des parties correspondantes en relief aptes à la formation des parties creuses. Cette solution permet donc de prévoir des formes et épaisseur variées pour la décoration 3, même éventuellement des épaisseurs importantes représentant des profondeurs de plus de 30% de l'épaisseur globale du matériau plastique 2.

En remarque, on choisira le moule le plus simple possible pour obtenir la décoration, de manière à éviter les surcoûts. Ainsi, l'application de la présente invention se fera en modifiant légèrement les surfaces habituellement lisses de chaque couche injectée d'une paroi de chaussure, en prévoyant une première couche globalement lisse, c'est à dire dont la plus grande partie de la surface dans la zone de la décoration forme une surface concave ou convexe lisse, mais incluant des parties de plus faible surface se trouvant dans leur totalité en creux sous cette surface supérieure globalement lisse de la chaussure. De préférence, les parties en creux de la décoration ne traversent pas totalement la première couche, qui est toujours visible au-travers de la seconde couche pour obtenir l'effet esthétique recherché.

La figure 2 illustre la partie de chaussure 1 terminée, après une seconde étape d'injection dans laquelle un second matériau plastique 4 transparent ou translucide est injecté sur une partie du premier matériau 2, de manière à recouvrir et pénétrer dans les parties creuses formant la décoration 3 dans l'épaisseur de la première couche.

L'invention concerne en outre le procédé de décoration d'une partie de chaussure, qui comprend donc les deux étapes essentielles suivantes :
- première injection d'une partie de chaussure avec un premier matériau plastique 2 formant une décoration 3 en creux par rapport à la surface lisse formée par l'ensemble du matériau 2 ;
- seconde injection d'un second matériau plastique 4 transparent ou translucide, pour recouvrir au moins partiellement la décoration 3.

Par ce procédé, il apparaît donc que le second matériau injecté pénètre dans les creux de la décoration 3 du premier matériau. De plus, en choisissant deux matériaux plastiques 2, 4 compatibles, le résultat obtenu sera une soudure entre les deux matériaux sur toute leur surface de contact pour former une paroi de deux couches totalement solidaires.

Selon une variante de réalisation intéressante, le second matériau plastique 4 surinjecté transparent ou translucide contient une coloration. Ainsi, il présente une couleur différente selon son épaisseur, devenant plus foncé quand son épaisseur augmente. Cela permet de mettre en valeur la décoration 3 puisque l'épaisseur du second matériau 4 est plus importante au niveau des parties creuses de la première couche de la paroi de chaussure, comme cela est bien illustré sur la figure 3. Les zones creuses formant la décoration 3 ressortent ainsi dans une couleur plus foncée que la paroi de chaussure avoisinante.

Cette solution permet donc d'obtenir une partie de chaussure de sport comprenant les avantages de la double injection, permettant de réaliser une paroi de chaussure en deux couches soudées par la combinaison de deux matériaux plastiques compatibles, aux caractéristiques mécaniques différentes, tout en ayant de plus une décoration. En remarque, une décoration réalisée en relief sur la première couche et non en creux dans la première couche ne conviendrait pas puisqu'elle exigerait une épaisseur de la seconde couche de matériau au moins supérieure à la hauteur du relief de la décoration pour la recouvrir. Au contraire, la solution retenue permet l'utilisation de n'importe quelle épaisseur, même très fine, du second matériau qui la recouvre en pénétrant dans les parties creuses. De plus, l'effet esthétique obtenu avec la décoration en creux dans la première couche est particulièrement unique et attrayant par rapport à toutes les autres solutions existantes. En variante, cette solution s'adapte aussi à d'autres types de paroi de chaussure qui seraient par exemple obtenues par plus de deux injections.

Ce procédé de décoration selon l'invention peut être combiné avec les procédés classiques de décoration de l'art antérieur, basés sur des décorations de la surface extérieure des parois des chaussures ou sur l'ajout d'un support de décoration disposé entre les deux couches injectées par exemple. Il est ainsi possible d'augmenter les effets esthétiques en obtenant par exemple des reliefs par deux décorations superposées se trouvant dans des plans différents.

En variante, la décoration peut être plus qu'une simple décoration et peut contenir des informations utiles, comme la marque de la chaussure, sa pointure...

Finalement, la solution atteint bien les objets mentionnés précédemment et présente les avantages suivants :
- comme la décoration est disposée au sein de la première couche de la chaussure, elle est protégée des agressions extérieures par la seconde couche qui la recouvre;
- la décoration ne nécessite aucune étape de décoration additionnelle, elle est obtenue par un procédé habituel de multi-injection, et nécessite seulement une légère modification du moule d'injection. Cette technique permet de définir facilement toute forme de décoration ainsi que toute épaisseur ;
- cette décoration a un impact négligeable sur le poids global et les caractéristiques mécaniques de la chaussure puisque la paroi conserve globalement partout la même épaisseur de matériau plastique ;
- l'invention permet aussi d'augmenter les effets esthétiques possibles, par exemple par la possibilité de combiner le procédé de décoration selon l'invention avec les autres procédés existants.

## Revendications

1. Partie de chaussure de sport (1) comprenant une paroi comprenant deux couches de matériaux plastiques (2, 4) superposés, le premier matériau plastique comprenant une décoration (3) réalisée en creux au sein de son épaisseur, au moins partiellement recouverte par le second matériau plastique (4), qui pénètre dans les creux de la décoration (3), le second matériau plastique (4) étant transparent ou translucide, et **caractérisée en ce que** le second matériau plastique (4) recouvrant la décoration (3) comprend une coloration.

2. Partie de chaussure de sport (1) selon la revendication 1, **caractérisée en ce que** les deux matériaux plastiques (2, 4) de la paroi de la chaussure sont des matériaux injectés.

3. Partie de chaussure de sport (1) selon la revendication 1 ou 2, **caractérisée en ce que** la décoration (3) en creux présente une profondeur supérieure à 30% de l'épaisseur du premier matériau (2).

4. Partie de chaussure de sport (1) selon l'une des revendications précédentes, **caractérisée en ce que** la première couche de la paroi dans le premier matériau (2) présente une surface globalement lisse dans la zone de la décoration (3), incluant des parties en creux sous cette surface globalement lisse formant la décoration (3) de la chaussure.

5. Partie de chaussure de sport (1) selon l'une des revendications précédentes **caractérisée en ce qu**'elle comprend de plus un support de décoration disposé entre les deux couches injectées de matériaux plastiques (2, 4).

6. Chaussure de ski comprenant une partie de chaussure (1) selon l'une des revendications précédentes.

7. Procédé de décoration d'une partie de chaussure de sport (1) comprenant les étapes suivantes :
- première injection d'un premier matériau plastique (2) comprenant une décoration (3) réalisée en creux dans l'épaisseur du premier matériau plastique (2);
- seconde injection d'un second matériau plastique (4) transparent ou translucide et comprenant une coloration, de manière à pénétrer et recouvrir au moins partiellement les creux de la décoration (3) de la première couche.

8. Procédé de décoration d'une partie de chaussure de sport (1) selon la revendication précédente, **caractérisé en ce qu**e les deux matériaux plastiques injectés sont compatibles entre eux de manière à être soudés.

9. Procédé de décoration d'une partie de chaussure de sport (1) selon la revendication précédente, **caractérisé en ce que** la première injection donne globalement une couche de matériau plastique (2) de surface globalement lisse, comprenant des parties en creux réalisées dans cette couche et formant une décoration (3).

## Claims

1. Sports boot part (1) comprising a wall comprising two superposed layers of plastic materials (2, 4), the first plastic material comprising a decoration (3) recessed into its thickness and at least partially covered by the second plastic material (4), which penetrates the recesses of the decoration (3), the second plastic material (4) being transparent or translucent, and said part being **characterized in that** the second plastic material (4) covering the decoration (3) includes a coloration.

2. Sports boot part (1) according to Claim 1, **characterized in that** the two plastic materials (2, 4) of the wall of the boot are injection-moulded materials.

3. Sports boot part (1) according to Claim 1 or 2, **characterized in that** the recessed decoration (3) has a depth greater than 30% of the thickness of the first material (2).

4. Sports boot part (1) according to one of the preceding claims, **characterized in that** the first layer of the wall in the first material (2) has a predominantly smooth surface in the area of the decoration (3), containing recessed parts under this predominantly smooth surface forming the decoration (3) of the boot.

5. Sports boot part (1) according to one of the preceding claims, **characterized in that** it also includes a decoration backing between the two injection-moulded layers of plastic materials (2, 4).

6. Ski boot comprising a boot part (1) according to one of the preceding claims.

7. Method of decorating a sports boot part (1) comprising the following steps:
- first injection of a first plastic material (2) comprising a decoration (3) recessed into the thickness of the first plastic material (2);
- second injection of a second transparent or translucent plastic material (4) and comprising a coloration, so as to penetrate and cover at least part of the recesses of the decoration (3) of the first layer.

8. Method of decorating a sports boot part (1) according to the preceding claim, **characterized in that** the two injection-moulded plastic materials are compatible with each other in such a way as to be welded.

9. Method of decorating a sports boot part (1) according to the preceding claim, **characterized in that** the first injection gives predominantly a layer of plastic material (2) of predominantly smooth surface, comprising parts recessed into this layer and forming a decoration (3).

## Patentansprüche

1. Teil eines Sportschuhs (1) mit einer Wand, die zwei überlagerte Schichten aus Kunststoffmaterialien (2, 4) aufweist, von denen das erste Kunststoffmaterial eine Verzierung (3) hat, welche vertieft in dieses Material eingearbeitet ist und teilweise vom zweiten Kunststoffmaterial (4) bedeckt ist, das in die Vertiefungen der Verzierung (3) eindringt, und das zweite Kunststoffmaterial (4) transparent oder durchscheinend ist, **dadurch gekennzeichnet, dass** das zweite Kunststoffmaterial (4), das die Verzierung (3) bedeckt, eine Färbung aufweist.

2. Teil eines Sportschuhs (1) nach Anspruch 1, **dadurch gekennzeichnet, dass** die beiden Kunststoffmaterialien (2, 4) der Schuhwand verspritzte Materialien sind.

3. Teil eines Sportschuhs (1) nach Anspruch 1 oder 2, durch **gekennzeichnet**, dass die vertiefte Verzierung eine Tiefe von mehr als 30% der Dicke des ersten Materials (2) hat.

4. Teil eines Sportschuhs (1) nach einem der vorhergehenden Ansprüche, **dadurch gekennzeichnet, dass** die erste, aus dem ersten Material (2) bestehende Schicht eine insgesamt glatte Oberfläche im Bereich der Verzierung (3) hat und diese erste Schicht die die Verzierung (3) des Schuhs bildenden vertieften Teile unter dieser insgesamt glatten Oberfläche einschliesst.

5. Teil eines Sportschuhs (1) nach einem der vorhergehenden Ansprüche, **dadurch gekennzeichnet, dass** dieses Teil ausserdem einen Träger der Dekoration aufweist, welcher zwischen zwei Schichten der verspritzten Kunststoffmaterialien angeordnet ist.

6. Schischuh (1) nach einem der vorhergehenden Ansprüche.

7. Verfahren zum Verzieren eines Teils eines Sportschuhs (1), **gekennzeichnet durch** die folgenden Schritte:
- Erste Spritzung eines ersten Kunststoffmaterials (2) mit einer vertieft in die Dicke dieses ersten Materials eingearbeiteten Verzierung (3);
- zweite Spritzung eines zweiten transparenten oder durchscheinenden, eine Färbung aufweisenden Kunststoffmaterials (4), derart, dass es wenigstens teilweise in die Vertiefungen der Verzierung (3) der ersten Schicht eindringt und diese bedeckt.

8. Verfahren nach dem vorhergehenden Anspruch, **dadurch gekennzeichnet, dass** die beiden verspritzen Kunststoffmaterialien miteinander kompatibel sind, so dass sie verschweisst werden.

9. Verfahren nach dem vorhergehenden Anspruch, **dadurch gekennzeichnet, dass** die erste Spritzung insgesamt eine Schicht des Kunststoffmaterials (2) mit einer insgesamt glatten Oberfläche erzeugt und diese Schicht vertieft eingearbeitete Teile aufweist, welche die Verzierung (3) bilden.
